# EUROPEAN PATENT APPLICATION

(11) **EP 3 045 348 A1**
(43) Date of publication of application: **20.07.2016**
(21) Application number: 16151501.0
(22) Date of filing: 15.01.2016
(51) Int. Cl.: B60P 1/00

(54) **EJECTOR AND COMPACTOR SYSTEM**

(30) Priority: 16.01.2015 IE 20150008
(71) Applicant: Kennedy, John, Tipperary (IE); Nolan, Michael, Myshall, County Carlow (IE); Nolan, Henry, Myshall, County Carlow (IE); Nolan, John, Fenagh, County Carlow (IE)
(72) Inventor: Kennedy, John, Tipperary (IE); Nolan, Michael, Myshall, County Carlow (IE); Nolan, Henry, Myshall, County Carlow (IE); Nolan, John, Fenagh, County Carlow (IE)
(74) Representative: O'Neill, Brian

(57) **Abstract**

The present invention provides a trailer comprising a trailer body having opposing sidewalls, a movable bulkhead (14) disposed between the sidewalls, and a lockable tailgate (16) disposed at one end of the sidewalls, wherein the bulkhead (14) is mounted on a rail (18) and is reversibly movable along said rail towards the tailgate.

## Description

### Field of the Invention

This invention relates to a trailer for receiving, compacting, transporting and ejecting materials, the trailer comprising a trailer body having a movable bulkhead disposed between sidewalls, and a lockable tailgate disposed at one end of the sidewalls, wherein the bulkhead is mounted on a rail and is reversibly movable along the rail towards the tailgate.

### Background of the Invention

Trailers for agricultural tractors or vehicles are typically used to transport loads of materials, such as soil, grain, crops, and agricultural waste. Material is loaded onto the trailer which is then towed by the tractor or other vehicle to a desired location where the material is then unloaded. Unloading may be carried out manually or by specialised machinery, such as a fork lift, which may be time-consuming and cumbersome. Alternatively, material may be unloaded from the trailer by inclining the trailer at an angle so that the materials slide out of the trailer under gravity, typically from the side or rear of the trailer. Such trailers are known as tipping trailers and have associated dangers including the possibility of the trailer (and vehicle) tipping over when a load is being emptied, or contacting overhead hazards such as power lines.

Trailers are commonly used for transporting low density materials such as agricultural crops, agricultural produce and other fibrous materials. However, transporting such materials, especially large volumes of materials, can be time consuming and laborious since multiple trips may be required to transport all of the material to a desired location. Large trailers may be used for such materials but such trailers can incur additional manufacturing or purchasing costs. It is therefore desirable to compact material, especially low density material, before it is loaded into the trailer. Such compacters are known in the art. However, the steps of placing the material in the compacter, compacting the material, and then loading the compacted material into the trailer can require undesirable lengths of time and/or specialised equipment.

The present invention had been devised with a view to mitigating these problems.

### Summary of the Invention

Accordingly, the present invention provides a trailer comprising
a trailer body comprising opposing sidewalls, a movable bulkhead disposed between the sidewalls, and a lockable tailgate disposed at one end of the sidewalls,
wherein the bulkhead is mounted on a rail and is reversibly movable along said rail towards the tailgate.

Thus, the trailer is operable to eject material from the trailer by moving the bulkhead towards the tailgate which may be opened to allow the material to exit the trailer. Advantageously, the tailgate may be locked and, therefore, when the material is moved by the bulkhead towards the tailgate, the material may be compacted between the bulkhead, tailgate, and sidewalls. The compacted material may then be ejected from the trailer by opening the tailgate and moving the bulkhead further towards the tailgate. Compacting material allows a greater amount of material to be transported in the trailer. This in turn leads to a decrease in road traffic, a decrease in the amount of labour and fuel required to carry out these jobs, which in turn leads to decreased emissions, and all of this allows for the increased efficiency of the work being carried out.

Optionally, the trailer comprises a floor disposed between the sidewalls. Optionally, the trailer further comprises a movable platform adjacent to the floor of the trailer. Optionally, the trailer further comprises a movable platform adjacent, and substantially parallel, to the floor of the trailer. Optionally, the platform is movable relative to the floor of the trailer. Optionally, the platform is substantially planar.

Optionally, the platform is movable by a first ram. Optionally, the ram is a double-acting ram. Optionally, the ram is a hydraulic cylinder, optionally a double-acting hydraulic cylinder. Optionally, the ram is disposed between the platform and the trailer body. Optionally, the ram is disposed between, and mounted to, the platform and the trailer body. In this arrangement, extension of the ram causes the platform to move relative to the trailer body, and/or relative to the floor and/or relative to the sidewalls, towards the tailgate. Retraction of the ram causes the platform to move relative to the trailer body, and/or relative to the floor and/or relative to the sidewalls, away from the tailgate. Optionally, the ram is attached to the trailer body via a mount, optionally a hydraulic cylinder mount.

Optionally, the bulkhead is mounted on the platform. Optionally, the bulkhead is mounted on, and supported by, the platform. Optionally, the bulkhead is movable relative to the platform. Optionally, the bulkhead is movable relative to the platform along a rail. Optionally, the rail is part the platform. Optionally, the rail is attached to the platform. Optionally, the rail is integrally formed with the platform.

Optionally, the bulkhead is movable relative to the platform by a second ram. Optionally, the ram is a double-acting ram. Optionally, the ram is a hydraulic cylinder, optionally a double-acting hydraulic cylinder. Optionally, the ram is disposed between the bulkhead and the platform. Optionally, the ram is disposed between, and mounted to, the bulkhead and the platform. In this arrangement, extension of the ram causes the bulkhead to move relative to the platform, and/or relative to the floor and/or relative to the sidewalls, towards the tailgate. Retraction of the ram causes the bulkhead to move relative to the platform, and/or relative to the floor and/or relative to the sidewalls, away from the tailgate. Optionally, the ram is attached to the platform via a mount, optionally a hydraulic cylinder mount.

Optionally, the second ram comprises a first and second hydraulic cylinder. Optionally, the ram comprises a first and second hydraulic cylinder arranged substantially parallel to each other. Optionally, the first and second hydraulic cylinders are extendable in substantially opposite directions. In this arrangement, extension of one or each of the first and second hydraulic cylinders can cause the bulkhead to move relative to the platform, and/or relative to the floor and/or relative to the sidewalls, towards the tailgate. Retraction of one or each of the first and second hydraulic cylinders causes the bulkhead to move relative to the platform, and/or relative to the floor and/or relative to the sidewalls, away from the tailgate. This arrangement further allows the bulkhead to move approximately twice the distance as that of a single cylinder, such as a double acting cylinder, disposed between the bulkhead and the platform, thereby halving the required length of the cylinder.

Optionally, the trailer is configured to be reversibly attached to a tractor or other towing vehicle. Optionally, the trailer is configured to be towed by a tractor or other towing vehicle. Alternatively, the trailer is configured to be mounted to a vehicle. In other words, the trailer may be configured to be integrally formed with a vehicle, or may be reversibly mountable to the vehicle.

Optionally, the trailer comprises connection means to connect to a power unit operable to provide power to the rams comprised in the trailer. Optionally, the power unit is located in a tractor or other towing vehicle to which the trailer may be reversibly attached, or located in a vehicle to which the trailer may be mounted. Alternatively, the trailer comprises a power unit operable to provide power to the rams comprised in the trailer. Optionally, the power unit comprises an engine for providing power via a hydraulic circuit comprised in the trailer, the hydraulic circuit driving the movement of the hydraulic rams of the trailers. Alternatively, the power unit is a generator for supplying electrical power, a compressor for supplying pneumatic power, an engine for providing mechanical power, or any combination of these and other known power mechanisms, operable to provide power to the rams comprised in the trailer.

### Brief Description of the Drawings

Embodiments of the present invention will now be described, by way of example, with reference to the accompanying drawings, in which:
Figure 1 is a side view of a trailer of the invention;
Figure 2 is a plan view of the trailer of the invention depicted in Figure 1;
Figure 3 is a side of the trailer of the invention depicted in Figure 1 in which the bulkhead is adjacent the tailgate;
Figure 4 is a perspective, cut-away view of the trailer of the invention depicted in Figure 1;
Figure 5a is a side view of a pair of hydraulic cylinders in a retracted configuration;
Figure 5b is a side view of the pair of hydraulic cylinders of Figure 5a in an extended configuration;
Figure 6 is a side view of a further trailer of the invention having a tow bar, hitching mechanism and ground wheels; and
Figure 7 is a perspective view of the trailer of Figure 6.

### Description of Preferred Embodiments

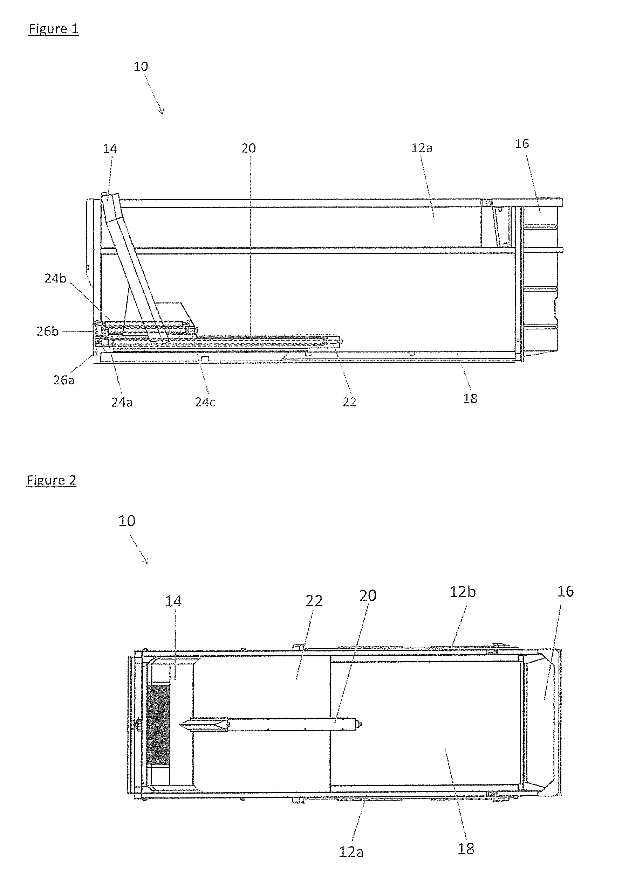

As illustrated in Figures 1 and 2, the present invention provides a trailer 10 comprising a trailer body defined by opposing sidewalls 12a,12b, a movable bulkhead 14 and a lockable tailgate 16 disposed between the sidewalls 12a,12b, and a floor 18. The bulkhead 14 is mounted on a rail 20 and is reversibly movable along said rail 20 towards, and away from, the tailgate 16. The bulkhead 14 and tailgate 16 are orientated substantially perpendicular to the sidewalls 12a,12b and extend substantially fully across width of the trailer 10. Further, the bulkhead 14, tailgate 16 and sidewalls 12a,12b are substantially vertical relative to the substantially horizontal floor 18. The longitudinal axis of the rail 20 along which the bulkhead 14 moves is substantially parallel to the longitudinal axes of the sidewalls 12a,12b and thus helps guide the movable bulkhead 14 towards, or away from, the tailgate 16.

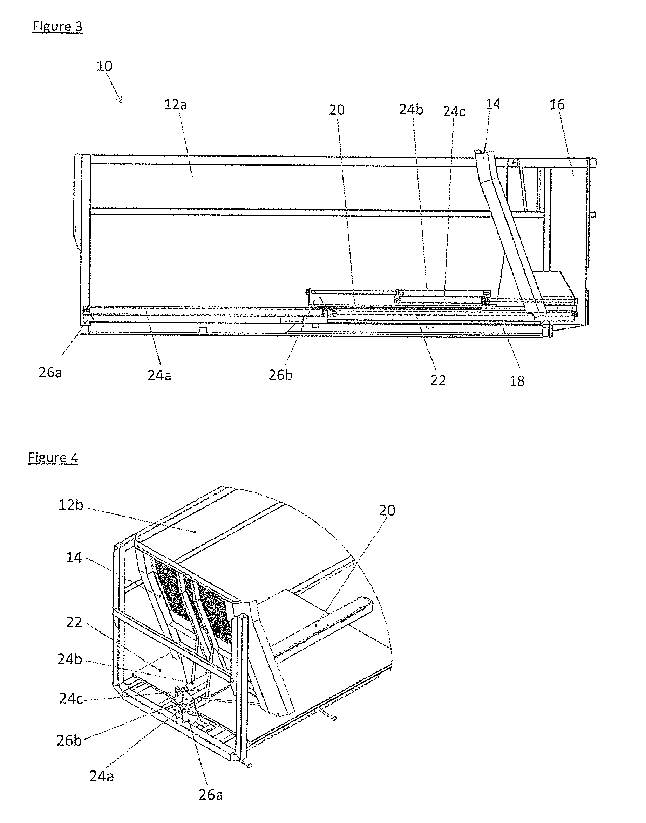

As depicted in Figure 1, the bulkhead 14 is typically located at the front end of the trailer 10 when material is being loaded into the trailer 10. When material is to be ejected from the trailer 10, the bulkhead 14 is moved towards the tailgate 16 at the rear of the trailer 10. The movement of the bulkhead 14 towards the tailgate 16 pushes, or otherwise urges, the material in the trailer 10 towards the tailgate 16. If the tailgate 16 is unlocked, some or all of the material is pushed out of the trailer 10. The tailgate 16 may be attached to the sidewalls 12a,12b or floor 18 by a hinge mechanism (not shown) or other suitable means known in the art. When unlocked, the tailgate 16 may be actively opened manually or by, for example, a hydraulic ram, or may be pushed open by the material being ejected from the trailer 10. If the tailgate 16 is locked, the movement of the bulkhead 14 towards the tailgate 16 results in the materials becoming compacted or otherwise compressed between the bulkhead 14, tailgate 16, sidewalls 12a,12b and floor 18. The compacted material may then be ejected from the trailer 10 by unlocking the tailgate 16 and moving the bulkhead 14 further towards the tailgate 16. Figure 3 depicts the trailer 10 in which the bulkhead 14 has been moved to a position adjacent the locked (closed) tailgate 16.

In some embodiments, the trailer 10 may further comprise a platform 22 within the trailer 10 and which is substantially parallel to the floor 18 (see, for example, Figures 1 and 3). The platform 22 is movable relative to the floor 18 and towards/away from the tailgate 16. The platform 22 supports the bulkhead 14 which is movable relative to the platform 22. The rail 20 along which the bulkhead 14 is movable may form part of platform 22, that is, the rail 18 may be fixed to, or integrally formed with, the platform 22. As can be seen in Figure 2, the rail 18 may of similar length to the platform 22. As will be appreciated, the length of the rail 18 is not particularly limited and may be greater or less than the length of the platform 22. Therefore, the bulkhead 14 may be moved along substantially the full length of the platform 22.

The bulkhead 14 and platform 22 may be moved by any suitable rams. In particular, hydraulic cylinders 24a, 24b, 24c may be used. Advantageously, such cylinders are double-acting hydraulic cylinders. Hydraulic cylinders generally comprise a rod or piston that extends from (and/or retracts into) the cylinders as a results of pumping hydraulic oil into the cylinders.

In embodiments of the present invention, a hydraulic cylinder 24a may be disposed between the platform 22 and the trailer body, i.e. the floor 18 and/or the side walls 12a,12b. The hydraulic cylinder 24a may be connected to the platform 22 and/or the trailer body via a cylinder mount(s) (26a). In use, the hydraulic cylinder 24a is operable to extend the rod from the cylinder thus causing the platform 22 to move relative to the trailer body (the floor 18 and/or the side walls 12a,12b) and towards the tailgate 16. Retraction of the rod into the cylinder causes the platform 22 to move relative to the trailer body (the floor 18 and/or the side walls 12a,12b) and away from the tailgate 16. The movement of the platform 22 towards or away from the tailgate 16 also has the effect of moving the bulkhead 14, as well as any material on or in front of the platform 22 and/or bulkhead 14, towards (or away from) the tailgate 16. As noted above, material in the trailer 10 may be ejected from the trailer 10 by movement of the bulkhead 14 towards the tailgate 16.

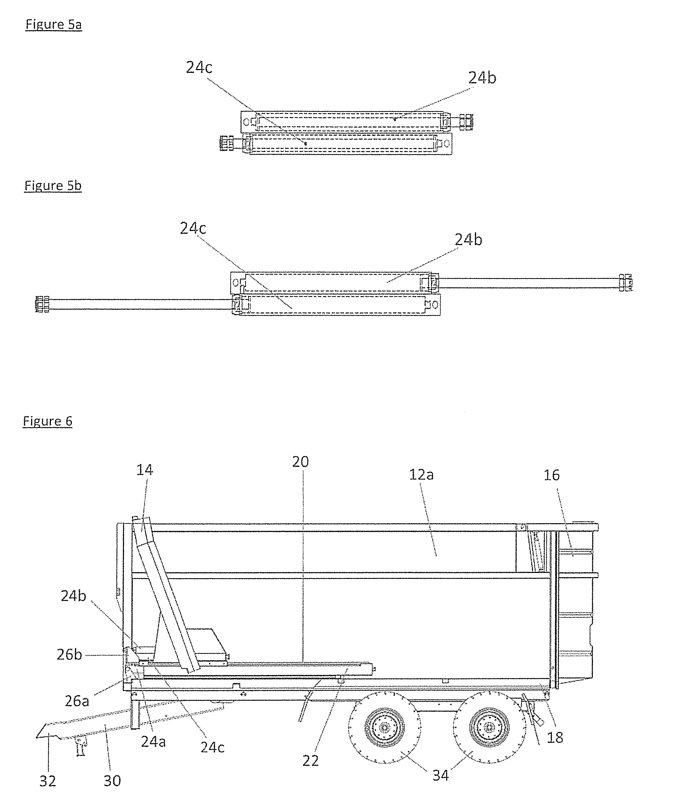

In embodiments of the present invention, hydraulic cylinders 24b, 24c may be disposed between the bulkhead 14 and the trailer body or the platform 22. The hydraulic cylinder 24b,24c may be connected to the bulkhead 14 and/or the trailer body or platform 22 via a cylinder mount(s) (26b). Hydraulic cylinders 24b,24c may be arranged such that the rod from cylinder 24b is extendable in substantially the opposite direction compared to the rod of cylinder 24b. The hydraulic cylinders 24b,24c may also be fixed to each other. This arrangement is depicted in Figures 5a and 5b. In Figure 5a, the hydraulic cylinders 24b,24c are in a retracted configuration. In Figure 5b, the hydraulic cylinders 24b,24c are in an extended configuration in which each rod 28b,28c can be seen to be extended from each respective cylinder. In use, the hydraulic cylinders 24b,24c are operable to extend their respective rod 28b,28c thus causing the bulkhead to move relative to the trailer body or the platform 22, and towards the tailgate 16. As will be appreciated, the bulkhead 14 is also moved relative to the floor 18 and/or the side wall 12a,12b. Retraction of the rods 28b,28c into the respective cylinders 24b,24c causes the bulkhead 14 to move relative to the platform 22 and away from the tailgate 16. As noted above, material in the trailer 10 may be ejected from the trailer 10 by movement of the bulkhead 14 towards the tailgate 16.

In use, the bulkhead 14 may be moved to the end of the platform 22 distal to the tailgate 16 by the retraction of cylinders 24b,24c. Before, during or after the bulkhead 14 is moved, the platform 22 may be moved to the end of the trailer 10 distal to the tailgate 16 by the retraction of cylinder 24a. In this configuration, the trailer 10 is at its maximum volume (Figure 1). Once material has been deposited into the trailer 10, the platform 22 may be moved towards the tailgate 16. The position of the bulkhead 14 may be fixed relative to the platform 22 while the platform 22 is moving. The movement of the platform 22 is controlled by the extension of cylinder 24a. When cylinder 24a is substantially fully extended, the bulkhead 14 has moved approximately half the length of the trailer 10 towards the tailgate 16. This distance may be sufficient to compact the material in the trailer 10 and/or to eject material from the trailer 10 if the tailgate 16 is open. The bulkhead 14 may further be displaced relative to the platform 22. Thus, the bulkhead 14 may be moved towards the tailgate 16 along the rail 20 by the extension of cylinders 24b,24c. This movement causes further compaction of the material and/or ejection of the material from the trailer 10 if the tailgate 16 is open. Subsequent retraction of cylinders 24b,24c causes the bulkhead 14 to move away from the tailgate 16 relative to platform 22. Retraction of cylinder 24a causes the platform 22 to move away from the tailgate 16 relative the trailer body. If will be appreciated that extension and retraction of the cylinders 24a,24b,24c, and thus movement of the platform 22 relative to the trailer body and movement of the bulkhead 14 relative to the platform 22, may occur simultaneously or consecutively.

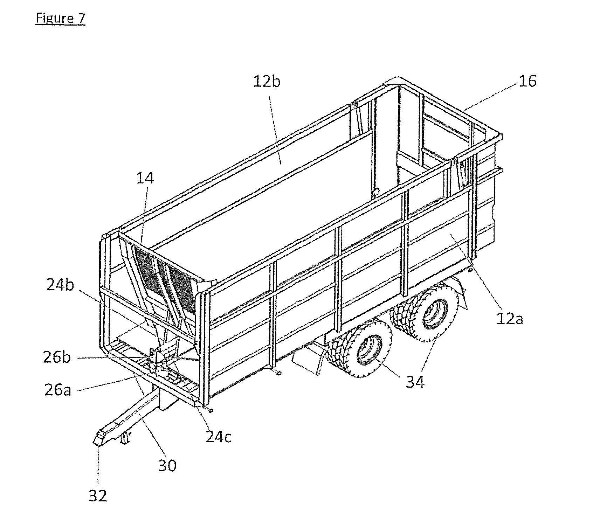

In further embodiments, the trailer 10 may be configured to be reversibly attached to a tractor or other towing vehicle. Thus, as depicted in Figures 6 and 7, the trailer 10 may further comprise a tow bar 30 and hitching mechanism 32 for attaching the trailer 10 to the tractor or other towing vehicle which have a corresponding hitching mechanism. Suitable tow bars and hitching mechanisms are well known in the art. The trailer may further comprise two or more ground wheels 34 suitable for keeping the trailer 10 spaced apart from the ground.

The trailer 10 may alternatively be configured to be mounted to a vehicle, such as a flatbed truck. Thus, the trailer 10 may be configured to be integrally formed with a vehicle, or may be reversibly mountable to the vehicle.

The trailer 10 may further comprises connection means (not shown) to connect to a power unit operable to provide power to the hydraulic cylinders 24a,24b,24c. The power unit may be located in a tractor or other vehicle (not shown) and power may be transferred to the trailer 10 via the connection means. Alternatively, the trailer 10 may comprise the power unit (not shown). The power unit may comprise an engine for providing hydraulic power to a hydraulic circuit in the trailer 10, the hydraulic circuit driving the movement of the hydraulic cylinders 24a,24b,24c. Alternatively, the power unit may be a generator for supplying electrical power, a compressor for supplying pneumatic power, an engine for providing mechanical power, or any combination of these and other known power mechanisms, operable to provide power to suitable rams comprised in the trailer 10.

The invention is not limited to the embodiments described herein but can be amended or modified without departing from the scope of the present invention as defined by the appended claims.

## Claims

1. A trailer comprising a trailer body comprising opposing sidewalls, a movable bulkhead disposed between the sidewalls, and a lockable tailgate disposed at one end of the sidewalls,
wherein the bulkhead is mounted on a rail and is reversibly movable along said rail towards the tailgate.

2. The trailer of Claim 1 comprising a platform which is reversibly movable relative to the trailer body.

3. The trailer of Claim 2 wherein the bulkhead is reversibly movable relative to the platform.

4. The trailer of Claim 2 or 3 comprising a first ram by which the platform is movable.

5. The trailer of Claim 5 wherein the first ram is a double acting ram.

6. The trailer of Claim 4 or 5 wherein the first ram is disposed between, and mounted to, the platform and the trailer body.

7. The trailer of any one of the preceding claims comprising a second ram by which the bulkhead is moveable.

8. The trailer of claim 7 wherein the second ram is a double acting ram.

9. The trailer of claim 7 or 8 wherein the second ram comprises a pair of hydraulic cylinders arranged substantially parallel to each other and extendable in substantially opposite directions.

10. The trailer of any one of claims 7 to 9 wherein the second ram is disposed between, and mounted to, the bulkhead and the platform.

11. The trailer of any one of the preceding claims comprising a floor disposed between the sidewalls.

12. The trailer of Claim 11 wherein the platform is movable relative to the floor.
